Europäisches Patentamt

European Patent Office

Office européen des brevets

(11) Veröffentlichungsnummer: **0 028 767**
**A1**

(12) # EUROPÄISCHE PATENTANMELDUNG

(21) Anmeldenummer: **80106624.2**

(22) Anmeldetag: **29.10.80**

(51) Int. Cl.³: **H 01 F 1/11**
**G 11 B 5/70**

(30) Priorität: **09.11.79 DE 2945203**

(43) Veröffentlichungstag der Anmeldung:
**20.05.81 Patentblatt 81/20**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Ohlinger, Manfred, Dr.**
**Anselm-Feuerbach-Strasse 13**
**D-6710 Frankenthal(DE)**

(72) Erfinder: **Vaeth, Guenter**
**Woogstrasse 35**
**D-6703 Limburgerhof(DE)**

(72) Erfinder: **Jakusch, Helmut, Dr.**
**Lorscher Ring 6C**
**D-6710 Frankenthal(DE)**

(72) Erfinder: **Koester, Eberhard, Dr.**
**Max-Slevogt-Strasse 23**
**D-6710 Frankenthal(DE)**

(72) Erfinder: **Sarnecki, Wilhelm, Dr.**
**Woogstrasse 48**
**D-6703 Limburgerhof(DE)**

(72) Erfinder: **Steck, Werner, Dr.**
**Lorscher Strasse 3**
**D-6704 Mutterstadt(DE)**

(54) **Verfahren zur Herstellung von Gamma-Eisen(III)oxid und seine Verwendung zur Herstellung von magnetischen Aufzeichnungsträgern.**

(57) Die Erfindung betrifft ein Verfahren zur Herstellung von nadelförmigem ferrimagnetischem Gamma-Eisen (III) oxid durch Reduktion von nadelförmigen Eisen (III) oxiden oder -oxidhydroxiden zum Magnetit mittels in einer Menge von 1 bis 5 Gewichtsprozent auf die Eisen (III) oxide oder -oxidhydroxide aufgebrachter zersetzlicher organischer Verbindungen und durch Überleiten eines Gemisches aus Inertgas und Wasserstoff im Volumenverhältnis von 9 : 1 bis 3 : 7 bei einer Produkttemperatur zwischen 280 und 600°C und anschließender Oxidation des Magnetits mit sauerstoffhaltigen Gasen bei 150 bis 450°C zum Gamma-Eisen (III) oxid sowie seine Verwendung zur Herstellung von magnetischen Aufzeichnungsträgern.

BASF Aktiengesellschaft  O.Z. 0050/034136

Verfahren zur Herstellung von Gamma-Eisen(III)oxid und seine Verwendung zur Herstellung von magnetischen Aufzeichnungsträgern

Die Erfindung betrifft ein Verfahren zur Herstellung von Gamma-Eisen-(III)oxid durch Reduktion von nadelförmigen Eisen(III)-oxiden oder -oxidhydroxiden zum Magnetit und anschließende Oxidation zum Gamma-Eisen(III)oxid sowie seine Verwendung zur Herstellung von magnetischen Aufzeichnungsträgern.

Nadelförmige ferrimagnetische Eisenoxide werden seit langem in großem Umfang als magnetisierbares Material bei der Herstellung von magnetischen Aufzeichnungsträgern eingesetzt. Zur Herstellung des vor allem verwendeten Gamma-Eisen(III)-oxids sind eine Vielzahl von Verfahren bekannt geworden. Diese gehen nahezu alle von in der $\alpha$- oder $\gamma$-Modifikation vorliegenden Eisen(III)oxidhydroxiden, d.h. vom Goethit bzw. Lepidokrokit, aus, da sich diese Ausgangsstoffe in einfacher Weise als nadelförmige Teilchen herstellen lassen. Bei der weiteren Verarbeitung werden diese Ausgangsstoffe, gegebenenfalls unter vorheriger Wasserabspaltung zum $\alpha$-Eisen(III)oxid, zum Magnetit reduziert und durch vorsichtige Oxidation in nadelförmiges und ferrimagnetisches Gamma-Eisen(III)oxid umgewandelt.

Von diesen Verfahrensschriften kommt vor allem der Art und Durchführung der Reduktion besondere Bedeutung zu. Schon in einer in der DE-PS 801 352 offenbarten Verfahrensweise werden unmagnetische Eisenoxide durch Behandeln mit Salzen kurzkettiger Carbonsäuren und anschließendem Erhitzen in Magnetit überführt. Gemäß der US-PS 2 694 656 werden unterschiedliche Reduktionsmittel, wie Wasserstoff, Natriumacetat, Pyrogallol und Schwefel zur Herstellung eines zumindest vorwiegend aus Magnetit bestehen-Sob/BL

den Materials eingesetzt. Weitere Untersuchungen, wie sie u.a. in der DE-PS 968 935 beschrieben sind, zeigen, daß sich Wasserstoff und/oder Kohlenmonoxid dann vorteilhaft einsetzen lassen, wenn sie 2 bis 8 % Sauerstoff enthalten. Durch die US-PS 2 900 236 ist dann bekannt geworden, daß sämtliche organische Verbindungen, welche bei Temperaturen unterhalb 540°C unter geringer Teer- und Aschebildung zersetzlich sind, sich für die Reduktion der unmagnetischen Eisenoxide zum Magnetit eignen. Dazu wird das Eisenoxid mit der gasförmigen, festen oder flüssigen organischen Substanz in Kontakt gebracht und auf eine Temperatur von 540 bis 650°C erhitzt. Während die US-PS 2 900 236 alle entsprechenden organischen Substanzen unter besonderer Nennung von Wachs, Stärke und Öl hierfür als brauchbar angibt, werden in der DE-AS 12 03 656 auf das Eisenoxid aufgefällte Salze löslicher Seifen, in der DE-OS 20 64 804 sowohl höhere Kohlenwasserstoffe, höhere Alkohole und Amine, höhere Fettsäuren und deren Salze, sowie Öle, Fette und Wachse, in der DL-PS 91 017 ebenfalls langkettige Carbonsäuren bzw. deren Salze, in der DE-AS 17 71 327 aliphatische Monocarbonsäuren mit 8 bis 25 Kohlenstoffatomen gegebenenfalls in Mischung mit Morpholin, in der DE-OS 22 12 435 diese Monocarbonsäuren und Morpholin zusammen mit Wasserstoff und in der JA-OS 80 499/1975 bei Raumtemperatur flüssige organische Verbindungen mit niedrigem Siedepunkt, wie z.B. Äthanol, enthaltende Inertgase als Reduktionsmittel für die Gewinnung von Magnetit aus unmagnetischen Eisenoxiden angeführt. In den genannten vorbekannten Verfahren wird teils unter Luftausschluß erhitzt, wobei die Reaktion auf der Stufe des Magnetits stehenbleibt, oder auch in Gegenwart von Luft, wodurch der Magnetit sofort zum Gamma-Eisen(III)oxid oxidiert wird.

Diese Verfahren können jedoch nicht in jeder Hinsicht befriedigen. Bei der Reduktion mit Wasserstoff und/oder Kohlenmonoxid wird die durch das Ausgangsmaterial vorgegebene Versinterung beeinträchtigt, so daß das als Endprodukt erhaltene Gamma-Eisen(III)oxid aus ziemlich großen Teilchen mit geringer Elongation besteht. Daraus hergestellte magnetische Aufzeichnungsträger können zwar eine ausreichende Tiefen- und auch Höhenaussteuerbarkeit aufweisen, jedoch entspricht die maximale Aussteuerbarkeit aufgrund des durch die gesinterten Teilchen verursachten hohen Betriebsrauschens meist nicht den Anforderungen.

Werden andererseits die Eisenoxide mit den flüssigen oder gelösten organischen Substanzen in Kontakt gebracht, so bilden sich hydrophile Materialien, bei denen das erforderliche Auswaschen der anorganischen Salze erschwert ist. Diese anorganischen Salze können dann die Bildung hochwertiger Gamma-Eisen(III)oxide beeinträchtigen. Aber auch das Mischen der trockenen Substanzen führt zu ungenügenden Ergebnissen, da eine ausreichend homogene Mischung der im Verhältnis zum Eisenoxid geringen Mengen an organischer Substanz mit dem stark agglomerierten Eisenoxid nur schwer zu erreichen ist. Daraus resultieren uneinheitliche Endprodukte, welche insbesondere hinsichtlich des Kopiereffektes der damit erhaltenen magnetischen Aufzeichnungsträger weniger geeignet sind. Wird demgegenüber die Reduktion der unmagnetischen Eisen(III)oxide zum Magnetit, wie bekannt mittels bei Raumtemperatur flüssiger organischer Verbindungen mit niedrigem Siedepunkt, welche dampfförmig oder in Mischung mit Inertgasen eingesetzt werden, durchgeführt, so treten bei den gegebenen Reduktionstemperaturen von 300°C und mehr ebenfalls die schon bei der Verwendung der üblichen reduzierenden Gase, wie Wasserstoff oder Kohlenmonoxid, bekannten und unerwünschten Sinterungen der feinteiligen Materialien auf, welche die magnetischen Eigenschaften ungünstig beeinflussen. Um dies zu vermeiden, ist auch schon vorgeschlagen worden, die Reduktion der nadelförmigen Eisenoxide mit einem überhitzten Dampfgemisch aus einer zersetzlichen organischen Verbindung und einem Inertgas durchzuführen. Hierdurch entstehen Gamma-Eisen(III)oxide mit einer Koerzitivfeldstärke über 27 kA/m, welche nach der Verarbeitung zwar magnetische Aufzeichnungsträger mit guten elektroakustischen Eigenschaften ergeben, aber allerdings eine der höheren Koerzitivfeldstärke entsprechend angepaßte Einstellung der Magnetbandgeräte erforderlich machen.

Der Erfindung lag somit die Aufgabe zugrunde, ein Verfahren zur Herstellung eines Gamma-Eisen(III)oxids bereitzustellen, welches nach seiner Verarbeitung magnetische Aufzeichnungsträger ergibt, die bei Werten für die Koerzitivfeldstärke zwischen 22 und 26 kA/m und hoher Tiefen- als auch Höhenaussteuerbarkeit sowohl rauscharm als auch kopierfest sind.

Es wurde nun gefunden, daß sich Gamma-Eisen(III)oxide mit den geforderten Eigenschaften herstellen lassen, wenn hierzu nadelförmige Eisen(III)oxide oder -oxidhydroxide mit 1 bis 5 Gewichtsprozent von in Gegenwart dieser Eisenoxide zersetzlicher organischer Verbindungen versehen, durch Überleiten eines Gemisches aus Inertgas und Wasserstoff im Volumenverhältnis von 9 : 1 bis 3 : 7 bei einer Produkttemperatur von 280 bis 600°C zum Magnetit reduziert und anschließend in an sich bekannter Weise mit sauerstoffhaltigen Gasen bei 150 bis 450°C zum Gamma-Eisen(III)oxid oxidiert werden.

Die für das erfindungsgemäße Verfahren geeingeten organischen Verbindungen weisen einen Fließpunkt von mindestens 250°C, eine Oberflächenspannung, gemessen bei 90°C, von 27 bis 30 dyn/cm und eine Dielektrizitätskonstante von 2,2 bis 2,6 auf. So eignen sich insbesondere hierfür langkettige organische Carbonsäure, wie z.B. Palmetin-, Stearin- und Ölsäure, als auch Sojalecithin sowie auch entsprechende Gemische davon.

Zur Durchführung des erfindungsgemäßen Verfahrens lassen sich die an sich üblichen Einrichtungen zur Herstellung von Gamma-Eisen(III)oxid benutzen. Hierbei wird die Reduktion als auch die sich anschließende Oxidation in kontinuierlichen oder diskontinuierlichen Drehrohren vorgenommen. In diese Vorrichtungen werden die pulverförmigen nadelförmigen Eisen(III)oxide oder -oxidhydroxide, wie Goethit und/oder Lepidokrokit oder $\alpha$-Fe$_2$O$_3$, eingebracht und diesem Produktstrom vor dessen Eintragen in den Reaktionsofen die organische Substanz in geeigneter Form, z.B. mittels einer Dosierschnecke oder einer Einspritzpumpe in der angegebenen Menge von 1 bis 5, vorzugsweise 1,5 bis 3,5 Gew.%, bezogen auf das vorgegebene Eisen(III)oxid oder -oxidhydroxid, zugeführt. Durch Überleiten eines Gemisches aus Inertgas, im allgemeinen Stickstoff, und Wasserstoff im Volumenverhältnis von 9 : 1 bis 3 : 7, vorzugsweise von 6:1 bis 1:1, und unter Einwirkung der angegebenen organischen Substanz wird das Eisen(III)oxid oder -oxidhydroxid bei einer Temperatur zwischen 280 und 600, vorzugsweise 300 bis 550°C und einer mittleren Verweilzeit von 25 bis 150, vorzugsweise 30 bis 60 Minuten zum Magnetit reduziert. Das für das erfindungsgemäße Verfahren ein-gesetzte Gasgemisch in m$^3$ verhält sich zur Produktmenge in kg wie 1 : 10 bis 1 : 2. Der entstandene Magnetit wird dann in bekannter Weise bei 150 bis 450, vorzugsweise 200 bis 280°C mit sauerstoffhaltigen Gasen zum Gamma-Eisen(III)-oxid umgewandelt.

Das nach dem erfindungsgemäßen Verfahren erhältliche Gamma-Eisen(III)oxid zeichnet sich durch einen im Vergleich zu den eingesetzten Eisenoxiden guten Erhalt der Nadelform aus. Dabei ist auffällig, daß dieses Material mit der angestrebten niedrigen Koerzitivfeldstärke von 22 bis 26 kA/m im Vergleich zu einem nach dem nächstliegenden Stand der Technik gefertigten Material nur eine mittlere Kristallitgröße zwischen 24 und 32 Nanometer bei einer spezifischen Oberfläche nach BET zwischen 17,5 bis 25 $m^2$/g aufweist. Diese Gamma-Eisen(III)oxide eignen sich deshalb in besonderer Weise zur Herstellung von magnetischen Aufzeichnungsträgern mit einer ausgezeichneten Tiefen- und Höhenaussteuerbarkeit bei gleichzeitig geringem Betriebsrauschen und zu dem noch günstigen Kopierdämpfungswerten.

Die Herstellung der magnetischen Aufzeichnungsträger unter Verwendung eines nach dem erfindungsgemäßen Verfahren erhaltenen Gamma-Eisen(III)oxids wird in der bekannten Weise unter Zuhilfenahme der hierbei üblichen Technologie vorgenommen.

Die Erfindung sei anhand folgender Beispiele und Vergleichsversuche näher erläutert.

Die spezifische Oberfläche der Pigmente wird nach BET bestimmt, d.h. an gewogenen evakuierten, gasfreien Pigmentproben wird Stickstoff adsorbiert. Die Differenzmenge Stickstoff vor und nach Adsorption wird ins Verhältnis zur Einwaage gesetzt.

Die Bestimmung der Größe der mittleren Kristallitgröße in den einzelnen Teilchen geschieht durch Röntgenbeugung. Mit einem Siemens-Zählrohrgoniometer wird an einer Pulverprobe das Reflexprofil, z.B. das (911)-Reflexes, vermessen. Nach Entfaltung mit der Apparatekonstante wird daraus die mitt- lere Kristallitgröße abgeleitet. Als Strahlungsquelle dient. z.B. die eisengefilterte K$\alpha$-Linie des Kobalts.

Die magnetischen Pulverwerte werden durch Messung einer auf ein Stopfgewicht von d = 1,2 g/cm3 gebrachten Oxidprobe mit einem konventionellen Schwingmagnetometer bei 100 kA/m Meßfeldstärke bestimmt. Die Koerzitivfeldstärke (Hc) wird in kA/m, die Remanenz (Mr/$\varrho$) und die spezifische Magnetisierung Mm/$\varrho$ werden in nTm$^3$/g angegeben.

Ebenfalls mit einem Schwingmagnetometer werden die Magnetbandproben bei einer Feldstärke von 100 kA/m untersucht. Angegeben wird die Koerzitivfeldstärke Hc, die remanente Magnetisierung Mr in mT und der Richtfaktor Rf, d.h. das Verhältnis der remanenten Magnetisierung längs zur Vorzugsrichtung zu der quer dazu. Die Messung der Tiefen- und Höhenaussteuerbarkeit erfolgt nach DIN 45 512 Teil II gegen das Bezugsband C 521V. Die Kopierdämpfung Kd und das Betriebsrauschen (Ruhegeräuschabstand über A-Filter gemessen, RGA) ist auf das Bezugsband T 308 S bezogen, welches gleich 0 dB gesetzt ist.

Beispiel 1

Durch einen in drei Heizzonen unterteilten Drehrohrofen wird kontinuierlich, in einer Menge von 60 kg pro Stunde, nadelförmiger Lepidokrokit mit einer spezifischen Oberfläche nach BET von 31,5 m$^2$/g, einer durchschnittlichen Nadellänge von 0,5 um bei einem Längen- zu Dickenverhältnis von 12 : 1 gefördert, wobei in die Einlaufschnecke noch zusätzlich 2,5 kg Stearinsäure pro Stunde kontinuierlich zudosiert werden. Gleichzeitig wird ein auf 500$^o$C aufgeheiztes Gasgemisch von Stickstoff und Wasserstoff im Volumen-Verhältnis von 2 : 1 und in einer Menge von 21 m$^3$ pro Stunde zusammen mit den Feststoffen durch den Drehrohrofen ge- leitet. Im Ofen wird das Eisenoxid entsprechend den drei Heizzonen aus 280, 380, 480°C Produkttemperatur erhitzt. Nach einer auf 40 Minuten eingestellten Verweilzeit fällt das reduzierte Produkt, d.h. der Magnetit über eine stickstoffgespülte Schleuse in einen zweiten Drehrohrofen, in welchem es bis einer mittleren Verweilzeit von 30 Minuten bei einer Produkttemperatur von 250°C mittels eines Luftstromes zu $\gamma$-Eisen(III)-oxid oxidiert wird. Die an dem resultierenden Produkt gemessenen Werte sind in Tabelle 1 angegeben.

Beispiel 2

Es wird wie in Beispiel 1 beschrieben verfahren, jedoch werden anstelle der Zugabe von 2,5 kg Stearinsäure je Stunde in der gleichen Zeit 3,0 kg Sojalecithin eingesetzt. Die Meßergebnisse sind in Tabelle 1 aufgeführt.

Beispiel 3

Es wird wie in Beispiel 1 beschrieben verfahren, jedoch werden anstelle von Stearinsäure die gleiche Menge Ölsäure zugesetzt. Die Meßergebnisse sind in Tabelle 1 angegeben.

Beispiel 4

Es wird wie in Beispiel 1 beschrieben verfahren, jedoch ist das eingesetzte Stickstoff-Wasserstoff-Gasgemisch im Volumen-Verhältnis von 8 : 2 zusammengesetzt. Die Meßergebnisse sind in Tabelle 1 angegeben.

Beispiel 5

60 kg nadelförmiger Lepidokrokit, wie in Beispiel 1 beschrieben, werden in einem Drehrohrofen unter Durchleiten eines erwärmten Stickstoffstromes von 20 m$^3$/Std. bei einer durchschnittlichen Produkttemperatur von 360°C innerhalb von 45 Minuten zu $\alpha$-Fe$_2$O$_3$ entwässert. Die anschließend durchgeführte Bestimmung der spezifischen Oberfläche nach BET ergibt 28,7 m$^2$/g. Dieses Produkt wird, wie in Beispiel 1 beschrieben, anstelle des dort eingesetzten Lepidokrokits zu $\gamma$-Eisen(III)-oxid umgewandelt. Die Meßergebnisse sind in Tabelle 1 angegeben.

Beispiel 6

Es wird wie in Beispiel 1 beschrieben verfahren, jedoch werden anstelle von Lepidokrokit nadelförmiger Goethit mit einer spezif. Oberfläche nach BET von 32,7 m$^2$/g und einer durchschnittlichen Nadellänge von 0,6 um bei einem Längen-zu-Dickenverhältnis von 14:1 eingesetzt.

Die Meßergebnisse sind in Tabelle 1 angegeben.

Vergleichsversuch 1

Temperaturprofil, Ausgangsprodukt und Umwandlungsbedingungen entsprechen Beispiel 1. Als Reduktionsmittel wird jedoch ausschließlich auf 500°C aufgeheizter Wasserstoff in einer Menge von 21 m$^3$ pro Stunde verwendet. Die Meßergebnisse sind in Tabelle 1 angegeben.

Vergleichsversuch 2

Es wird wie in Beispiel 1 beschrieben verfahren, jedoch werden zur Reduktion die Stearinsäure und das Stickstoff-Wasserstoffgemisch durch einen auf 250°C aufgeheizten Äthylalkohol-Dampf ersetzt. Die Meßergebnisse sind in Tabelle 1 angegeben.

## Vergleichsversuch 3

1 Teil Lepidokrokit, wie in Beispiel 1 beschrieben, wird in 10 Teile Wasser suspendiert. Unter kräftigem Rühren wird der Suspension noch eine Mischung von 90 % Kokosnußfettsäure und 10 % Morpholin, in einer Menge von 5 Gew.%, bezogen auf das in der Suspension befindliche $\gamma$-FeOOH, zugesetzt. Die Suspension wird dann filtriert und mit Trinkwasser gewaschen, das Filtergut getrocknet. Das getrocknete Produkt wird mittels einer Drehrohrofenstraße analog Beispiel 1 zu $\gamma$-Eisen(III)oxid umgewandelt, wobei die Zumischung von Stearinsäure in den Reduktionsofen entfällt und als Gasstrom 21 m$^3$ pro Stunde auf 500$^o$c aufgeheizter Stickstoff eingeleitet werden. Die Meßergebnisse sind in Tabelle 1 angegeben.

## Vergleichsversuch 4

Wie in Beispiel 5 beschrieben, wird Lepidokrokit zu $\alpha$-Fe$_2$O$_3$ entwässert. Dieses Produkt wird in einen 3 Heizzonen unterteilten Drehrohrofen in einer Menge von 20 kg pro Stunde gefördert, während gleichzeitig ein durch einen mit auf 300$^o$C aufgeheizte Stearinsäure gefüllten Behälter geleiteter Stickstoffstrom zusammen mit dem Eisenoxid in den Drehrohrofen geleitet wird. Im Ofen wird das Eisenoxid entsprechend den drei Heizzonen auf 565, 585 und 620$^o$ Produkttemperatur erhitzt. Die durch den Stickstoffstrom eingebrachte Stearinsäuremenge beträgt 1 kg/h. Die Verweilzeit des Produktes beträgt im Reduktionsofen 45 Minuten. In einem über eine Schleuse nachgeschalteten zweiten Drehrohrofen wird der erhaltene Magnetit bei 250$^o$C und einer Verweilzeit von 40 Minuten mit einem Luftstrom zu $\gamma$-Eisen-(III)-oxid oxidiert. Die Meßergebnisse sind in Tabelle 1 angegeben.

Tabelle 1

| | Oberfläche nach BET | Kristallit- größe nm | Hc | Mr/g | Mm/g |
|---|---|---|---|---|---|
| Beispiel 1 | 21,2 | 26 | 24,5 | 40,1 | 77,2 |
| Beispiel 2 | 20,4 | 24 | 23,8 | 39,8 | 74,8 |
| Beispiel 3 | 20,8 | 25,5 | 24,7 | 40,3 | 76,4 |
| Beispiel 4 | 21,3 | 23 | 23,6 | 40,6 | 77,5 |
| Beispiel 5 | 24,8 | 31 | 26,0 | 41,1 | 79,2 |
| Beispiel 6 | 21,4 | 26,3 | 25,8 | 42,7 | 78,0 |
| Vergleichsversuch 1 | 15,0 | 38 | 24,0 | 42,5 | 80,8 |
| Vergleichsversuch 2 | 16,2 | 36 | 23,9 | 41,8 | 79,7 |
| Vergleichsversuch 3 | 18,1 | 26,5 | 24,0 | 37,8 | 73,7 |
| Vergleichsversuch 4 | 19,1 | 33,1 | 29,4 | 40,2 | 75,6 |

_Beispiele A bis K_

Nach folgender Vorschrift werden die magnetischen Materialien gemäß den Beispielen 1 bis 5 und Vergleichsversuchen 1 bis 4 zu Magnetbändern verarbeitet.

Dazu werden in einer Stahlkugelmühle mit einem Füllvolumen von 10 000 Volumenteilen, die mit 65 Umdrehungen pro Minute betrieben wird, 10 000 Teile Stahlkugeln, 1 300 Teile des entsprechenden magnetischen Materials, 32 Teile eines langkettigen amphoteren, organophilen Dispergiermittels, je 6 Teile eines Siliconöles und eines Carbonsäuregemisches mit 12 bis 20 C-Atomen, 190 Teile eines handelsüblichen isocyanatfreien Polyesterurethans aus Adipinsäure, Butandiol-1,4 und 4,4'-Dicyanato-diphenylmethan mit einem K-Wert von 63 (gemessen als 1 %ige Lösung in Tetrahydrofuran) und 96 Teile eines Vinylchlorid-Maleinsäure-äthylester-Copolymeren mit einem K-Wert von 59 (Ebenfalls gemessen als 1 %ige Lösung in Tetrahydrofuran), sowie 34 000 Teile eines Gemisches aus gleichen Teilen von Tetrahydrofuran und 1,4-Dioxan zugegeben, wobei die Eingabe der angegebenen Bindemittel in Form ihrer gemeinsamen Lösung in dem genannten Lösungsmittelgemisch erfolgt. Die Gesamtmischung wird in der Kugelmühle 4 1/2 Tage angerieben, bis eine ausreichende Oberflächenglätte eines Abstriches einer Dispersionsprobe festgestellt wird. Die so erhaltene Magnetdispersion wird dann durch eine Cellulose-Asbestfaserschicht filtriert und anschließend mit einer geeigneten Beschichtungseinrichtung auf eine 12 µm dicke Polyäthylenterephthalat-Folie gegossen, so daß nach Trocknung in einem Trockenkanal und anschließendem Glättvorgang mit auf 70°C beheiztem Mehrwalzenkalander auf einen Rv-Wert der Schicht von 0,12 µm, gemessen mit einem Meßgerät der Firma Perthen, Hannover, eine Schichtdicke von 4,5 µm verbleibt. Im Bereich der noch nassen Schicht des Trockenkanals befindet sich dabei ein über die gesamte Breite der Magnetschicht reichender Magnet, welcher die Magnetteilchen in die gewünschte Vorzugsrichtung dreht. Die so hergestellten Magnetbänder werden in 3,81 mm Breite geschnitten.

Die entsprechenden Meßergebnisse an den einzelnen Magnetbändern sind in Tabelle 2 aufgeführt.

Tabelle 2

| Beispiel | Material | Hc [kA/m] | Mr [mT] | Rf. | Aussteuerbarkeit bei 1K Hz (dB) | 10K Hz (dB) | RGA Wert (dB) | K (dB) |
|---|---|---|---|---|---|---|---|---|
| A | Beispiel 1 | 24,2 | 160 | 3,3 | +2,0 | +1,5 | 0 | 0 |
| B | Beispiel 2 | 23,8 | 158 | 2,9 | +2,2 | +1,0 | -0,5 | +0,5 |
| C | Beispiel 3 | 24,5 | 155 | 3,2 | +1,8 | +1,8 | 0 | -0,3 |
| D | Beispiel 4 | 23,4 | 162 | 3,0 | +2,4 | +0,8 | +0,5 | 0 |
| E | Beispiel 5 | 25,9 | 164 | 2,8 | +2,0 | +2,0 | -0,7 | +0,8 |
| F | Beispiel 6 | 25,5 | 152 | 2,5 | +0,9 | +2,1 | -0,5 | +1,0 |
| G | Vergleichsvers. 1 | 24,3 | 125 | 2,1 | +0,2 | 0 | +0,5 | +1,2 |
| H | Vergleichsvers. 2 | 23,9 | 122 | 2,2 | 0 | -0,2 | 0 | +1,4 |
| J | Vergleichsvers. 3 | | | | | | | |
| K | Vergleichsvers. 4 | 29,1 | 167 | 2,6 | +1,0 | 0 | -2,2 | +2,0 |

Bezugsbd. C 521 V    Bezugsbd.T 308 S

O.Z. 0050/034136

0028767

Patentansprüche

1. Verfahren zur Herstellung von nadelförmigem ferrimagnetischem Gamma-Eisen(III)oxid durch Reduktion von nadelförmigen Eisen(III)oxiden oder -oxidhydroxiden bei Temperaturen zwischen 280 und 600°C mit in diesem Temperaturbereich in Gegenwart von Eisenoxiden zersetzlichen organischen Verbindungen und Wasserstoff zum Magnetit und anschließender Oxidation des Magnetits mit sauerstoffhaltigen Gasen bei 150 bis 450°C, dadurch gekennzeichnet, daß die Reduktion der Eisen-(III)oxide oder -oxidhydroxide durch die in einer Menge von 1 bis 5 Gewichtsprozent auf die Eisen(III)-oxide oder -oxidhydroxide aufgebrachten zersetzlichen organischen Verbindungen und durch Überleiten eines Gemisches aus Inertgas und Wasserstoff im Volumenverhältnis von 9 : 1 bis 3 : 7 erfolgt.

2. Verwendung der gemäß Anspruch 1 hergestellten Gamma-Eisen(III)oxide zur Herstellung von magnetischen Aufzeichnungsträgern.

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 428 875 (BASF A.G.)<br><br>* Ansprüche 1,7; Seiten 9-10; Beispiel 2 * | 1,2 |
| | -- | |
| | FR - A - 2 130 407 (PFIZER INC.)<br><br>* Ansprüche 1-7; Seite 9, Zeilen 13-29; Seite 1, Zeilen 1-3 *<br><br>& DE - A - 2 212 435 | 1,2 |
| | -- | |
| | FR - A - 2 286 796 (BASF A.G.)<br><br>* Anspruch 1; Seite 1, Zeilen 1-3 *<br><br>& DE - A - 2 447 386 | 1,2 |
| | -- | |
| | CHEMICAL ABSTRACTS, Band 87, Nr. 12, 19. September 1977, Seite 679, Nr. 94639m<br>Columbus, Ohio, U.S.A.<br><br>& JP - A - 77 56098 (KANTO DENKA KOGYO CO., LTD.) 09-05-1977<br><br>* Zusammenfassung * | 1 |
| | -- | |
| | CHEMICAL ABSTRACTS, Band 84, Nr. 10, 8. März 1976, Seite 667, Nr. 68818n<br>Columbus, Ohio, U.S.A.<br><br>& JP - A - 75 95799 (HITACHI MAKU-SERU CO., LTD.) 30-07-1975<br><br>* Zusammenfassung * | 1,2 |
| | -- | |
| | CHEMICAL ABSTRACTS, Band 84, Nr. 12, 22. März 1976, Seite 671, Nr. | 1,2 |

**KLASSIFIKATION DER ANMELDUNG (Int Cl.³)**

H 01 F 1/11
G 11 B 5/70

**RECHERCHIERTE SACHGEBIETE (Int. Cl.³)**

H 01 F 1/11

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-02-1981 | DECANNIERE |

EPA form 1503.1   06.78

Europäisches
Patentamt

**EUROPÄISCHER RECHERCHENBERICHT**

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der Maßgeblichen Teile | | betrifft Anspruch | |
| | 83406v<br>Columbus, Ohio, U.S.A.<br>& JP - A - 75 98500 (HITACHI MAKU-<br>SERU CO., LTD.) 05-08-1975<br>\* Zusammenfassung \*<br><br>-- | | | |
| A | FR - A - 1 423 425 (W.R. GRACE & CO.)<br>\* Zusammenfassung 1°, III \*<br><br>-- | | 1,2 | |
| P | EP - A - 0 014 302 (BASF A.G.)<br>\* Anspruch 1; Seite 1, Zeilen 15-18 \*<br><br>---- | | 1,2 | RECHERCHIERTE SACHGEBIETE (Int. Cl.³) |

EPA Form 1503.2   06.78